# EUROPEAN PATENT APPLICATION

(11) **EP 4 744 556 A1**
(43) Date of publication of application: **20.05.2026**
(21) Application number: 24842059.8
(22) Date of filing: 23.05.2024
(51) Int. Cl.: A47J 36/00, G06F 3/041, A47J 37/00, A47J 27/00, G06F 3/04842, G06F 3/0488, G06F 3/0481

(54) **DISPLAY CONTROL ASSEMBLY, COOKING APPLIANCE, CONTROL METHOD AND APPARATUS FOR COOKING APPLIANCE, AND STORAGE MEDIUM**

(30) Priority: 17.07.2023 CN 202310875020
(71) Applicant: Guangdong Midea Kitchen Appliances Manufacturing Co., Ltd., Foshan, Guangdong 528311 (CN)
(72) Inventor: YU, Menglian, Foshan, Guangdong 528311 (CN); CHEN, Hongmei, Foshan, Guangdong 528311 (CN); TANG, Zhi, Foshan, Guangdong 528311 (CN); YUAN, Jinjiang, Foshan, Guangdong 528311 (CN); FAN, Weijian, Foshan, Guangdong 528311 (CN)
(74) Representative: RGTH
(86) International application number: PCT/CN2024/094933
(87) International publication number: WO 2025/016059

(57) **Abstract**

Provided are a display control assembly, a cooking appliance, a control method and a control apparatus for same, and a storage medium. The display control assembly includes: a light board assembly including a plurality of light-emitting areas, a grille being disposed between every two adjacent light-emitting areas of the plurality of light-emitting areas; and a first touch control assembly covering the light board assembly. The first touch control assembly includes a first film. A plurality of images are attached to the first film. The plurality of images correspond to the plurality of light-emitting areas. A covering portion is disposed between every two adjacent images of the plurality of images. The covering portion is configured to shield the grille. The covering portion is of a first color. A pixel value of the first color is smaller than a target value. By the above display control assembly, an integrated display effect of the plurality of images can be enhanced, achieving simulation of a large-screen visual effect via the first touch control assembly and improving realism of the simulation of the large-screen visual effect via the first touch control assembly.

## Description

### CROSS-REFERENCE TO RELATED APPLICATION

This application claims priority to Chinese patent application No. 202310875020.2, titled "DISPLAY CONTROL ASSEMBLY, COOKING APPLIANCE, CONTROL METHOD AND APPARATUS FOR COOKING APPLIANCE, AND STORAGE MEDIUM" filed with China National Intellectual Property Administration on July 17, 2023, the entire contents of which are incorporated herein by reference.

### FIELD

The present disclosure relates to the technical field of cooking appliances, and more particularly, to a display control assembly, a cooking appliance, a control method and a control apparatus for a cooking appliance, and a storage medium.

### BACKGROUND

In application scenarios, color film keys are generally used to simulate the visual effect of a large screen by controlling turning on and off of lights. However, at present, when simulating the visual effect of the large screen via the color film keys, image displayed on the color film keys has low smoothness, which reduces the visual realism of the color film keys simulating the large screen.

### SUMMARY

The present disclosure aims to solve at least one of the technical problems in the prior art or in the related art.

To this end, a first aspect of the present disclosure is to provide a display control assembly.

A second aspect of the present disclosure is to provide a control method for a cooking appliance.

A third aspect of the present disclosure is to provide a control apparatus for a cooking appliance.

A fourth aspect of the present disclosure is to provide another control apparatus for a cooking appliance.

A fifth aspect of the present disclosure is to provide a cooking appliance.

A sixth aspect of the present disclosure is to provide another cooking appliance.

A seventh aspect of the present disclosure is to provide a readable storage medium.

In view of this, according to a first aspect of the present disclosure, a display control assembly is provided. The display control assembly comprises: a light board assembly comprising a plurality of light-emitting areas, a grille being disposed between every two adjacent light-emitting areas of the plurality of light-emitting areas; and a first touch control assembly covering the light board assembly. The first touch control assembly comprises a first film. A plurality of images are attached to the first film, the plurality of images corresponding to the plurality of light-emitting areas, a covering portion being disposed between every two adjacent images of the plurality of images, and the covering portion being configured to shield the grille. The covering portion is of a first color. A pixel value of the first color is smaller than a target value.

The display control assembly provided by the present disclosure comprises the light board assembly and the first touch control assembly.

In some embodiments, the light board assembly comprises the plurality of light-emitting areas. Each of the plurality of light-emitting areas comprises at least one first light dot. In addition, the grille is disposed between every two adjacent light-emitting areas of the plurality of light-emitting areas.

In some embodiments, the first touch control assembly covers the light board assembly. The first touch control assembly is connected to the light board assembly.

In some embodiments, the first touch control assembly comprises the first film.

In some embodiments, the plurality of images are attached to the first film. The plurality of images correspond to the plurality of light-emitting areas. During operation of the display control assembly, the user may control an on-off effect of the first light dot in the corresponding light-emitting area of the light board assembly by touching a predetermined area corresponding to a predetermined image in the first touch control assembly.

That is, during the operation of the display control assembly, the light board assembly may provide a light source for the first touch control assembly, to enable the plurality of images attached to the first film to be clearly displayed.

In some embodiments, the covering portion is disposed between every two adjacent images of the plurality of images.

In some embodiments, in response to the first touch control assembly covering the light board assembly, the covering portion on the first film corresponds to the grille of the light board assembly. That is, the covering portion on the first film is configured to shield the grille of the light board assembly.

In some embodiments, the covering portion on the first film is of a first color.

In some embodiments, the pixel value of the above first color is smaller than the target value. The target value is close to zero.

In this way, during the operation of the display control assembly, when the light board assembly provides the light source for the first touch control assembly to enable the plurality of images attached to the first film to be clearly displayed, the covering portion of the first color is disposed at the first film. In this way, on the one hand, a sense of separation between the plurality of images attached to the first film can be blurred by the covering portion of the first color, improving display smoothness between the plurality of images attached to the first film, and thus enhancing an integrated display effect of the plurality of images. On the other hand, the grille on the light board assembly can be shielded by the covering portion of the first color to achieve a soft transition of the grille on the light board assembly, further enhancing the integrated display effect of the plurality of images. Therefore, the first touch control assembly can simulate the large-screen visual effect, and realism of the large-screen visual effect simulated by the first touch control assembly can be improved.

The above display control assembly according to the present disclosure further comprises the following additional technical features.

In some technical solutions, the first touch control assembly further comprises: a second film covering the first film and configured to receive a touch input from a user; and a third film covering the second film. The third film is of a second color, a pixel value of the second color being smaller than or equal to the pixel value of the first color.

In the technical solution, the above first touch control assembly may specifically further comprise the second film and the third film.

In some embodiments, the second film covers the first film and is configured to receive the touch input from the user.

In some embodiments, the third film covers the second film.

In some embodiments, the third film is a semi-transparent film of the second color.

In some embodiments, the pixel value of the second color is smaller than or equal to the pixel value of the above first color.

In this way, during the operation of the display control assembly, on the one hand, the touch input from the user can be received by the first touch control assembly, and in-depth logical interaction can be achieved based on the touch input from the user. On the other hand, by covering the first film with a semi-transparent film of a second color, namely the third film, when the light source is provided for the first touch control assembly by the light board assembly, clear display of the plurality of images attached to the first film can be ensured. In addition, when no light source is provided for the first touch control assembly by the light board assembly, the plurality of images attached to the first film can be shielded by the third film, enabling the plurality of images attached to the first film to be kept in a hidden state and not to be seen by the naked eye. In this way, when the light board assembly is turned on, the plurality of images attached to the first film can be clearly displayed, while when the light board assembly is turned off, the plurality of images attached to the first film can be hidden. In this way, a visual effect of simulating screen-on and screen-off of the large screen can be achieved by the first touch control assembly, further improving the realism of the large-screen visual effect simulated by the first touch control assembly.

In some technical solutions, a color of the covering portion is in a gradient mode.

In the technical solution, the color of the above covering portion is in the gradient mode. For example, the color of the covering portion may specifically be a gradient color in black. In this way, the covering portion with a gradient color can further improve the display smoothness between the plurality of images attached to the first film, and enhance a soft transition effect of the grille on the light board assembly, improving the integrated display effect of the plurality of images and increasing the realism of the large-screen visual effect simulated by the first touch control assembly.

In some technical solutions, the display control assembly further comprises: a first panel covering the first touch control assembly; and a second touch control assembly. A first opening is formed at each of the first touch control assembly and the first panel. The second touch control assembly extends through the first opening. A display screen is disposed at the second touch control assembly.

In the technical solution, the above display control assembly may specifically further comprise the first panel and the second touch control assembly.

In some embodiments, the first panel covers the first touch control assembly. The first panel can provide protection for the first touch control assembly.

In some embodiments, the second touch control assembly is electrically connected to the first touch control assembly.

In some embodiments, the first opening is formed at each of the first touch control assembly and the first panel. The second touch control assembly extends through the first opening.

In some embodiments, the display screen is disposed at the second touch control assembly. During the operation of the display control assembly, a user interface can be displayed by the display screen, enabling the user to perform a touch operation on the second touch control assembly based on a content displayed in the user interface, achieving deeper-level logical interaction through the second touch control assembly.

In some technical solutions, the display control assembly further comprises: a circuit board, the light board assembly and the second touch control assembly being disposed at the circuit board; and a third touch control assembly disposed at the circuit board.

In the technical solution, the display control assembly further comprises the circuit board and the third touch control assembly.

In some embodiments, each of the light board assembly and the second touch control assembly is disposed at the circuit board. The first touch control assembly is electrically connected to the circuit board via the light board assembly.

In some embodiments, each of the light board assembly and the second touch control assembly has a circuit connection port. The light board assembly and the second touch control assembly are electrically connected to and powered by the circuit board via the circuit connection port.

In some embodiments, the third touch control assembly is also disposed at the circuit board. The third touch control assembly is configured to receive the user input.

In some embodiments, the first touch control assembly, the second touch control assembly, and the third touch control assembly may specifically serve as three-level touch keys in the display control assembly. Through coordinated operation of the first touch control assembly, the second touch control assembly, and the third touch control assembly, combined linkage display and control can be realized. Therefore, design integrity and operational simplicity of the display control assembly can be achieved, improving an efficiency of user interaction and control via the display control assembly. Also, by virtue of light navigation of the light board assembly, a realistic large-screen visual effect can be simulated by the first touch control assembly, and flattening of a function level can be realized. Therefore, without increasing a manufacturing cost, the operational simplicity and visual integrity can be enhanced.

In some technical solutions, the light board assembly further comprises a first buckle. The first touch control assembly is connected to the light board assembly via the first buckle.

In the technical solution, the light board assembly is provided with the first buckle.

In response to the first touch control assembly covering the light board assembly, the first touch control assembly is connected to the light board assembly via the first buckle. In this way, displacement of the first touch control assembly relative to the light board assembly during the operation of the display control assembly is avoided, ensuring that the plurality of images attached to the first film can accurately correspond to the plurality of light-emitting areas of the light board assembly. Therefore, accuracy of operation and control of the first touch control assembly can be ensured.

According to a second aspect of the present disclosure, a control method for a cooking appliance is provided. The cooking appliance comprises a display control assembly comprising a first touch control assembly and a second touch control assembly. A plurality of images are disposed at the first touch control assembly. A display screen is disposed at the second touch control assembly. The control method for the cooking appliance comprises: receiving a first input from a user for a target image on the first touch control assembly, the target image corresponding to a target function of the cooking appliance; increasing, in response to the first input, display contrast of the target image, and displaying a sub-function of the target function on the display screen; receiving a second input from the user for the second touch control assembly; and displaying, in response to the second input, a functional parameter of the sub-function of the target function on the display screen.

An execution subject of the technical solution of the control method for the cooking appliance provided herein may be the cooking appliance, or the control apparatus for the cooking appliance, and may also be determined according to actual usage requirements, which is not limited herein. To describe the control method for the cooking appliance provided herein more clearly, the following description is given on the premise that the execution subject of the control method for the cooking appliance is the control apparatus for the cooking appliance.

The control method for the cooking appliance provided herein is used to control operation of the cooking appliance. The aforementioned cooking appliance comprises the display control assembly according to any of the aforementioned technical solutions. The display control assembly comprises the first touch control assembly and the second touch control assembly. The plurality of images are disposed at the first touch control assembly. The plurality of images correspond to a plurality of cooking functions of the cooking appliance, respectively. The display screen is disposed at the second touch control assembly.

In the control method for the cooking appliance provided herein, in the process where the user controls the operation of the cooking appliance via the aforementioned display control assembly, the control apparatus for the cooking appliance may receive the first input from the user for the target image on the first touch control assembly, where the target image corresponds to the target function of the cooking appliance. In response to the first input from the user, the control apparatus for the cooking appliance can increase the display contrast of the target image to indicate that a cooking function corresponding to the target image is in a selected state while other cooking functions are in a non-selectable state. Specifically, the control apparatus for the cooking appliance can increase display brightness of the target image while reducing display brightness of other images other than the target image on the first touch control assembly, to inform the user of a currently selected cooking function. Also, in response to the first input from the user, the control apparatus for the cooking appliance can display an interface content associated with the aforementioned target function on a display screen of the second touch control assembly. Specifically, at least one sub-function of the aforementioned target function may be displayed on the display screen of the second touch control assembly.

In some embodiments, the user may further select a predetermined sub-function of the aforementioned target function by means of a second input for the second touch control assembly. The control apparatus for the cooking appliance is configured to receive the second input from the user for the second touch control assembly, and in response to the second input, display a functional parameter of a sub-function of a target function selected by the user on the display screen of the second touch control assembly, to allow the user to control the cooking appliance to perform a cooking operation according to a corresponding functional parameter. In this way, the first touch control assembly and the second touch control assembly operate as a first-level touch control key and a second-level touch control key, respectively, realizing combined linkage display and control during operation of the cooking appliance, and improving the operational simplicity of the cooking appliance. In addition, an efficiency of user interaction with the cooking appliance via the display control assembly can be improved. Also, by simulating a realistic large-screen visual effect via the first touch control assembly and realizing the flattening of the function level, the operational simplicity and the visual integrity during the operation of the cooking appliance can be enhanced without increasing the manufacturing cost.

The above control method for the cooking appliance according to the present disclosure further comprises the following additional technical features.

In some technical solutions, the second input comprises a first sub-input and a second sub-input. The displaying, in response to the second input, the functional parameter of the sub-function of the target function on the display screen comprises: switching, in response to the first sub-input, the sub-function of the target function displayed on the display screen; and in response to a target sub-function being displayed on the display screen, displaying, in response to the second sub-input, a functional parameter of the target sub-function on the display screen.

In the technical solution, the above second input may specifically comprise the first sub-input and the second sub-input. In response to the second input from the user for the second touch control assembly, the control apparatus for the cooking appliance displays the functional parameter of the sub-function of the target function selected by the user on the display screen of the second touch control assembly. In this process, the control apparatus for the cooking appliance may switch, in response to the first sub-input from the user, the sub-function of the target function displayed on the display screen of the second touch control assembly. In response to the user selecting the target sub-function displayed on the display screen, the control apparatus for the cooking appliance may, in response to the second sub-input from the user, display the functional parameter of the target sub-function on the display screen of the second touch control assembly. In this way, combined linkage display and control during the operation of the cooking appliance can be achieved, enhancing the operational simplicity of the cooking appliance and improving the efficiency of user interaction with the cooking appliance via the display control assembly.

In some technical solutions, the control method for the cooking appliance further comprises, subsequent to the displaying the functional parameter of the sub-function of the target function on the display screen: receiving a third input from the user for the second touch control assembly; and setting, in response to the third input, a parameter value of the functional parameter, and controlling operation of the cooking appliance according to the parameter value.

In the technical solution, subsequent to the user selecting a predetermined sub-function of the above target function via the second input on the second touch control assembly, and causing the functional parameter of the sub-function of the target function selected by the user to be displayed on the display screen of the second touch control assembly, the control apparatus for the cooking appliance may receive and respond to the third input from the user for the second touch control assembly, set the parameter value of the functional parameter of the sub-function selected by the user, and control the operation of the cooking appliance according to the parameter value set by the user. In this way, hierarchical control over a function of the cooking appliance can be realized via the first touch control assembly and the second touch control assembly, achieving the combined linkage display and control during the operation of the cooking appliance, enhancing the operational simplicity of the cooking appliance, and improving the efficiency of user interaction with the cooking appliance via the display control assembly.

In some technical solutions, the third input comprises a third sub-input and a fourth sub-input. The setting, in response to the third input, the parameter value of the functional parameter comprises: switching, in response to the third sub-input, the parameter value of the functional parameter displayed on the display screen; and in response to a first numerical value being displayed on the display screen, setting, in response to the fourth sub-input, the parameter value of the functional parameter as the first numerical value.

In the technical solution, the above third input may specifically comprise the third sub-input and the fourth sub-input. In the process where the control apparatus for the cooking appliance controls, in response to the third input from the user for the second touch control assembly, the operation of the cooking appliance according to the parameter value set by the user, the control apparatus for the cooking appliance may, in response to the third sub-input from the user, adjust the parameter value of the functional parameter of the sub-function displayed on the display screen of the second touch control assembly. In response to the user selecting the first numerical value displayed on the display screen, the control apparatus for the cooking appliance may, in response to the fourth sub-input from the user, set a specific parameter value of a corresponding functional parameter as the first numerical value. In addition, subsequent to completion of setting of all parameter values of functional parameters of the sub-function selected by the user, the cooking appliance is controlled to operate according to the functional parameter value set by the user. In this way, hierarchical control over the function of the cooking appliance can be realized via the first touch control assembly and the second touch control assembly, achieving the combined linkage display and control during the operation of the cooking appliance, enhancing the operational simplicity of the cooking appliance, and improving the efficiency of user interaction with the cooking appliance via the display control assembly.

In some technical solutions, the control method for the cooking appliance further comprises, subsequent to the setting the parameter value of the functional parameter as the first numerical value: during cooking, switching, in response to a fourth input from the user for the second touch control assembly, the parameter value of the functional parameter from the first numerical value to a second numerical value.

In the technical solution, subsequent to the parameter value of the functional parameter of the selected sub-function being set as the first numerical value via the third input from the user for the second touch control assembly, and the cooking appliance being controlled to perform the cooking operation according to the first numerical value, during the cooking of the cooking appliance, a functional parameter value for controlling the cooking appliance to perform the cooking operation may be reset via the fourth input from the user for the second touch control assembly according to actual needs of the user. Based on this, during the cooking of the cooking appliance, the fourth input from the user for the second touch control assembly may be received and responded to by the control apparatus for the cooking appliance, the parameter value of the functional parameter of the selected cooking sub-function may be reset from an originally set first numerical value to a newly set second numerical value by the user, and the cooking appliance may be controlled to continue the cooking operation according to the newly set second numerical value. In this way, the operational simplicity of the cooking appliance can be improved, and the efficiency of user interaction with the cooking appliance via the display control assembly can be enhanced.

In some technical solutions, the control method for the cooking appliance further comprises, subsequent to the setting, in response to the third input, the parameter value of the functional parameter: displaying cooking progress information on the display screen according to the parameter value of the functional parameter, the cooking progress information comprising at least one of: a cooking mode, remaining cooking time, or a cooking temperature; and displaying, subsequent to completion of the cooking process, prompt information on the display screen.

In the technical solution, subsequent to a specific parameter value of the functional parameter of the selected sub-function being set via the third input from the user for the second touch control assembly, and the cooking appliance being controlled to perform the cooking operation according to the set parameter value, the control apparatus for the cooking appliance may further be configured to display the cooking progress information on the display screen of the second touch control assembly based on the parameter value of the functional parameter set by the user. In addition, subsequent to completion of the cooking operation by the cooking appliance, the control apparatus for the cooking appliance may further be configured to display the prompt information on the display screen of the second touch control assembly to remind the user that the cooking process ends. In this way, the user can grasp the cooking progress in a timely manner and perform a subsequent operation timely after the cooking process ends, improving usability of the cooking appliance, and thus enhancing a cooking efficiency of the user.

In some embodiments, the above cooking progress information may specifically comprise the at least one of: the remaining cooking time, the cooking temperature, a cooking power, or the cooking mode. The cooking mode is configured to indicate a cooking sub-function that the cooking appliance is currently executing.

In some technical solutions, the display control assembly further comprises a third touch control assembly. Subsequent to the controlling the operation of the cooking appliance according to the parameter value, the control method for the cooking appliance further comprises: receiving a fifth input from the user for the third touch control assembly; and in response to the fifth input, controlling the cooking appliance to cancel or pause operation, and reducing the display contrast of the target image.

In the technical solution, the above display control assembly may specifically comprise the third touch control assembly.

Subsequent to the cooking appliance being controlled to perform the cooking operation according to the set parameter value via the third input from the user for the second touch control assembly, during the cooking of the cooking appliance, the control apparatus for the cooking appliance may be configured to receive and respond to the fifth input from the user for the third touch control assembly to interrupt or cancel the cooking operation that the cooking appliance is currently executing. Also, the control apparatus for the cooking appliance may be configured to reduce the display contrast of the target image, to restore cooking functions corresponding to the plurality of images on the first touch control assembly to a selectable state. Specifically, the control apparatus for the cooking appliance is configured to reduce the display brightness of the target image while increasing display brightness of other images on the first touch control assembly except the target image, to adjust the plurality of images set at the first touch control assembly to be in the same display brightness. In this way, the operational simplicity of the cooking appliance can be improved, and the efficiency of user interaction with the cooking appliance via the display control assembly can be enhanced.

According to a third aspect of the present disclosure, a control apparatus for a cooking appliance is provided. The cooking appliance comprises a display control assembly, the display control assembly comprising a first touch control assembly and a second touch control assembly. A plurality of images are disposed at the first touch control assembly. A display screen is disposed at the second touch control assembly. The control apparatus for the cooking appliance comprises: a receiving unit configured to receive a first input from a user for a target image in the first touch control assembly, the target image corresponding to a target function of the cooking appliance; a display unit configured to, in response to the first input, increase display contrast of the target image and display a sub-function of the target function on the display screen. The receiving unit is further configured to receive a second input from the user for the second touch control assembly. The display unit is further configured to, in response to the second input, display a functional parameter of the sub-function of the target function on the display screen.

The control apparatus for the cooking appliance provided by the present disclosure is configured to control the operation of the cooking appliance. The above cooking appliance comprises the display control assembly according to any of the aforementioned technical solutions. The display control assembly comprises the first touch control assembly and the second touch control assembly. The plurality of images are disposed at the first touch control assembly. The plurality of images correspond to a plurality of cooking functions of the cooking appliance, respectively. The display screen is disposed at the second touch control assembly.

The control apparatus for the cooking appliance provided by the present disclosure comprises the receiving unit and the display unit. In the process in which the operation of the cooking appliance is controlled by the user via the above display control assembly, the receiving unit may be configured to receive the first input from the user for the target image in the first touch control assembly. The target image corresponds to the target function of the cooking appliance. The display unit is configured to, in response to the first input from the user, increase the display contrast of the target image to indicate that the cooking function corresponding to the target image is in a selected state while other cooking functions are in a non-selectable state. Specifically, the display unit is configured to increase the display brightness of the target image while reducing the display brightness of images other than the target image in the first touch control assembly, to inform the user of the currently selected cooking function. Also, in response to the first input from the user, the display unit is configured to display the interface content associated with the aforementioned target function on the display screen of the second touch control assembly. Specifically, the display unit is configured to display at least one sub-function of the aforementioned target function on the display screen of the second touch control assembly.

In some embodiments, the user may further select the predetermined sub-function of the aforementioned target function by means of the second input for the second touch control assembly. The receiving unit is configured to receive the second input from the user for the second touch control assembly. The display unit is configured to, in response to the second input, display the functional parameter of the sub-function of the target function selected by the user on the display screen of the second touch control assembly, to allow the user to control the cooking appliance to perform the cooking operation according to the corresponding functional parameter. In this way, the first touch control assembly and the second touch control assembly operate as the first-level touch control key and the second-level touch control key, respectively, realizing the combined linkage display and control during the operation of the cooking appliance, improving the operational simplicity of the cooking appliance. In addition, the efficiency of user interaction with the cooking appliance via the display control assembly can be improved. Also, by simulating the realistic large-screen visual effect via the first touch control assembly and realizing the flattening of the function level, the operational simplicity and the visual integrity during the operation of the cooking appliance can be enhanced without increasing the manufacturing cost.

According to a fourth aspect of the present disclosure, another control apparatus for a cooking appliance is provided. The control apparatus comprises: a memory configured to store a program or an instruction; a processor. The processor is configured to, when executing the program or the instruction, implement the steps of the control method for the cooking appliance according to any of the above technical solutions. Therefore, the control apparatus for the cooking appliance provided in the fourth aspect of the present disclosure has all the advantageous effects of the control method for the cooking appliance in any of the technical solutions of the second aspect mentioned above, and details thereof will be omitted here.

According to a fifth aspect of the present disclosure, a cooking appliance is provided. The cooking appliance comprises the display control assembly in the technical solution of the first aspect mentioned above. The cooking appliance provided in the fifth aspect of the present disclosure comprises the display control assembly in the technical solution of the first aspect mentioned above. Therefore, the cooking appliance provided in the fifth aspect of the present disclosure has all the advantageous effects of the display control assembly in the technical solution of the first aspect mentioned above, and details thereof will be omitted here.

According to a sixth aspect of the present disclosure, another cooking appliance is provided. The cooking appliance comprises the control apparatus for the cooking appliance in the technical solution of the fourth aspect mentioned above. The cooking appliance provided in the sixth aspect of the present disclosure comprises the control apparatus for the cooking appliance in the technical solution of the fourth aspect mentioned above. Therefore, the cooking appliance provided in the sixth aspect of the present disclosure has all the advantageous effects of the control apparatus for the cooking appliance in the technical solution of the fourth aspect mentioned above, and details thereof will be omitted here.

In some embodiments, the above cooking appliance comprises, but is not limited to: a microwave oven, an oven, a microwave-convection-steam oven, an air fryer, a rice cooker, an electric rice cooker, and other cooking appliances, which are not specifically limited herein.

According to a seventh aspect of the present disclosure, a readable storage medium is provided. The readable storage medium has a program or an instruction stored thereon. The program or the instruction is configured to, when executed by a processor, implement the control method for the cooking appliance according to any of the above technical solutions. Therefore, the readable storage medium provided in the seventh aspect of the present disclosure has all the advantageous effects of the control method for the cooking appliance in any of the technical solutions of the second aspect mentioned above, and details thereof will be omitted here.

Additional aspects and advantages of the present disclosure will become apparent at least in part from the following description, or can be learned from practicing of the present disclosure.

### BRIEF DESCRIPTION OF THE DRAWINGS

The above and/or additional aspects and advantages of the present disclosure will become more apparent and more understandable from the following description of embodiments taken in conjunction with the accompanying drawings.
FIG. 1 is a block diagram showing a structure of a display control assembly according to an embodiment of the present disclosure.
FIG. 2 is a schematic structural diagram of a display control assembly according to an embodiment of the present disclosure.
FIG. 3 is a first schematic flowchart of a control method for a cooking appliance according to an embodiment of the present disclosure.
FIG. 4 is a second schematic flowchart of a control method for a cooking appliance according to an embodiment of the present disclosure.
FIG. 5 is a first schematic diagram showing an operation interface for a control method for a cooking appliance according to an embodiment of the present disclosure.
FIG. 6 is a second schematic diagram showing an operation information for a control method for a cooking appliance according to an embodiment of the present disclosure.
FIG. 7 is a third schematic diagram showing an operation information for a control method for a cooking appliance according to an embodiment of the present disclosure.
FIG. 8 is a fourth schematic diagram showing an operation information for a control method for a cooking appliance according to an embodiment of the present disclosure.
FIG. 9 is a fifth schematic diagram showing an operation information for a control method for a cooking appliance according to an embodiment of the present disclosure.
FIG. 10 is a sixth schematic diagram showing an operation information for a control method for a cooking appliance according to an embodiment of the present disclosure.
FIG. 11 is a seventh schematic diagram showing an operation information for a control method for a cooking appliance according to an embodiment of the present disclosure.
FIG. 12 is an eighth schematic diagram showing an operation information for a control method for a cooking appliance according to an embodiment of the present disclosure.
FIG. 13 is a ninth schematic diagram showing an operation information for a control method for a cooking appliance according to an embodiment of the present disclosure.
FIG. 14 is a first block diagram showing a structure of a control apparatus for a cooking appliance according to an embodiment of the present disclosure.
FIG. 15 is a second block diagram showing a structure of a control apparatus for a cooking appliance according to an embodiment of the present disclosure.
FIG. 16 is a first block diagram showing a structure of a cooking appliance according to an embodiment of the present disclosure.
FIG. 17 is a second block diagram showing a structure of a cooking appliance according to an embodiment of the present disclosure.

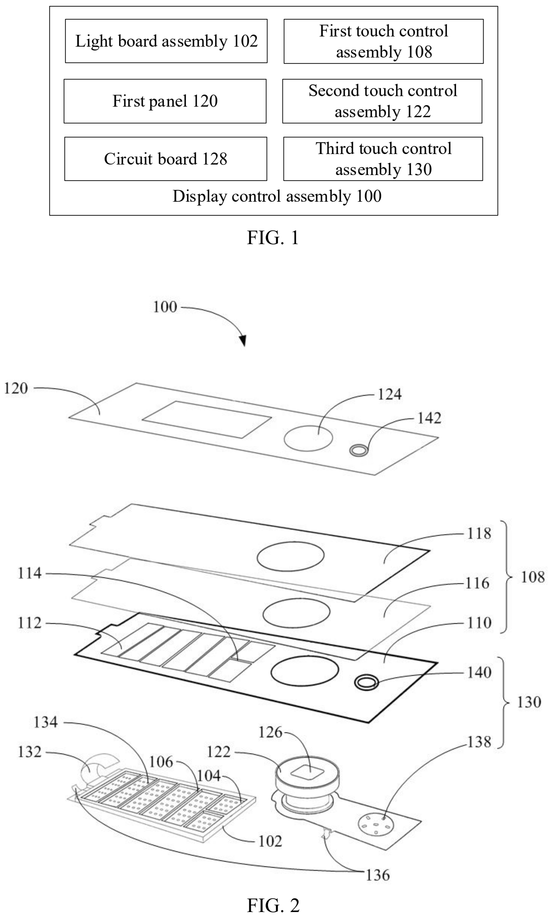

A correspondence between reference numerals and structures in FIG. 2 is as follows.

100 display control assembly; 102 light board assembly; 104 light-emitting area; 106 grille; 108 first touch control assembly; 110 first film; 112 image; 114 covering portion; 116 second film; 118 third film; 120 first panel; 122 second touch control assembly; 124 first opening; 126 display screen; 130 third touch control assembly; 132 first buckle; 134 first light dot; 136 circuit connection port; 138 second light dot; 140 first color ring; 142 second color ring.

### DETAILED DESCRIPTION OF THE EMBODIMENTS

To better understand the above objectives, features, and advantages of the present disclosure, the present disclosure will be described in further detail below with reference to the accompanying drawings and specific implementations. It should be noted that, in the case of no conflict, embodiments of the present disclosure and features in the embodiments may be combined with each other.

In the following description, many specific details are set forth to facilitate a full understanding of the present disclosure. However, the present disclosure may also be implemented in other ways different from those described herein. Therefore, the protection scope of the present disclosure is not limited by specific embodiments disclosed below.

A display control assembly, a cooking appliance, and a control method and a control apparatus for a cooking appliance, and a storage medium according to the embodiments of the present disclosure will be described in detail below with reference to FIG. 1 to FIG. 17 through embodiments and application scenarios thereof.

In some embodiments of the present disclosure, as illustrated in FIG. 1 and FIG. 2, a display control assembly 100 is provided. The display control assembly 100 comprises a light board assembly 102 and a first touch control assembly 108.

In some embodiments, as illustrated in FIG. 2, the light board assembly 102 comprises a plurality of light-emitting areas 104. Each light-emitting area 104 comprises at least one first light dot 134. In addition, a grille 106 is disposed between every two adjacent light-emitting areas 104 of the plurality of light-emitting areas 104.

In some embodiments, a first touch control assembly 108 covers the light board assembly 102. The first touch control assembly 108 is connected to the light board assembly 102.

In some embodiments, as illustrated in FIG. 2, the first touch control assembly 108 comprises a first film 110.

In some embodiments, as illustrated in FIG. 2, a plurality of images 112 are attached to the first film 110. The plurality of images 112 correspond to the plurality of light-emitting areas 104. During operation of the display control assembly 100, a user can control, by touching an area corresponding to an image 112 among the plurality of images 112 in the first touch control assembly 108, the on and off of the first light dot 134 in a corresponding light-emitting area 104 of the light board assembly 102.

That is, during the operation of the display control assembly 100, the light board assembly 102 is capable of providing a light source for the first touch control assembly 108, to enable the plurality of images 112 attached to the first film 110 to be clearly displayed.

In some embodiments, as illustrated in FIG. 2, a covering portion 114 is disposed between every two adjacent images 112 of the plurality of images 112.

In some embodiments, when the first touch control assembly 108 covers the light board assembly 102, the position of the covering portion 114 on the first film 110 corresponds to the position of the grille 106 of the light board assembly 102. That is, the covering portion 114 on the first film 110 is configured to shield the grille 106 of the light board assembly 102.

In some embodiments, the covering portion 114 on the first film 110 is of a first color.

In some embodiments, a pixel value of the first color is smaller than a target value. The target value is close to zero.

In this way, during the operation of the display control assembly 100, when the light board assembly 102 provides the light source for the first touch control assembly 108 to enable the plurality of images 112 attached to the first film 110 to be clearly displayed, the covering portion 114 of the first color is disposed at the first film 110. In this way, on one hand, a sense of separation between the plurality of images 112 attached to the first film 110 can be blurred by the covering portion 114 of the first color, improving display smoothness between the plurality of images 112 attached to the first film 110, and thus enhancing an integrated display effect of the plurality of images 112; on the other hand, the grille 106 on the light board assembly 102 can be shielded by the covering portion 114 of the first color to achieve a soft transition of the grille 106 on the light board assembly 102, further enhancing the integrated display effect of the plurality of images 112. Therefore, the first touch control assembly 108 can simulate a large-screen visual effect, and realism of the large-screen visual effect simulated by the first touch control assembly 108 can be improved.

In some embodiments, the above first touch control assembly 108 may be an Indium Tin Oxide (ITO) color film layer, which is not specifically limited herein.

In some embodiments, the above first film 110 may be a color film. The plurality of images 112 may be disposed at the first film 110 through printing.

In some embodiments, depending on a difference in an application scenario of the display control assembly 100, content of the plurality of images 112 disposed at the first film 110 varies. For example, when the above display control assembly 100 is applied to a cooking appliance, the plurality of images 112 disposed at the first film 110 may correspond to different cooking functions of the cooking appliance, respectively, such as a microwave function, a baking function, a stewing function, and an air frying function.

In some embodiments, the above first color may be a deep dark color such as charcoal black, brown black, navy black, glossy black, ivory black, coal black, ink black, and blue black. The above first color may be set by a person skilled in the art as desired, which is not specifically limited herein.

In some embodiments of the present disclosure, as illustrated in FIG. 2, the above first touch control assembly 108 may further comprise a second film 116 and a third film 118.

In some embodiments, as illustrated in FIG. 2, the second film 116 covers the first film 110. The second film 116 is configured to receive a touch input from a user.

In some embodiments, as illustrated in FIG. 2, the third film 118 covers the second film 116.

In some embodiments, the third film 118 is a semi-transparent film of a second color.

In some embodiments, a pixel value of the second color is smaller than or equal to the pixel value of the first color.

In this way, during the operation of the display control assembly 100, on the one hand, the first touch control assembly 108 can receive the touch input from the user, and in-depth logical interaction can be achieved based on the touch input from the user; on the other hand, by covering the first film 110 with the semi-transparent film of the second color, namely the third film 118, clear display of the plurality of images 112 attached to the first film 110 can be ensured when the light source is provided for the first touch control assembly 108 by the light board assembly 102, and the plurality of images 112 attached to the first film 110 can be shielded by the third film 118 when no light source is provided for the first touch control assembly 108 by the light board assembly 102, enabling the plurality of images 112 attached to the first film 110 to be in a hidden state and not to be seen by the naked eye. In this way, when the light board assembly 102 is turned on, the plurality of images 112 attached to the first film 110 can be clearly displayed, while when the light board assembly 102 is turned off, the plurality of images 112 attached to the first film 110 can be hidden. In this way, a visual effect of simulating screen-on and screen-off of a large screen can be achieved by the first touch control assembly 108, further improving the realism of the large-screen visual effect simulated by the first touch control assembly 108.

In some embodiments, the second film 116 may be a transparent ITO control film, which is not specifically limited herein.

In some embodiments, the second color may be a deep dark color such as charcoal black, brown black, navy black, glossy black, ivory black, coal black, ink black, and blue black. The above second color may be set by the person skilled in the art as desired, which is not specifically limited herein.

In addition, light transmittance of the above third film 118 may be set by the person skilled in the art as desired. For example, a black semi-transparent film with 15% light transmittance is selected as the third film 118, which is not specifically limited herein.

In some embodiments of the present disclosure, the color of the covering portion 114 is in a gradient mode. For example, the color of the above covering portion 114 may be gradient black. In this way, the covering portion 114 with a gradient color can further improve the display smoothness between the plurality of images 112 attached to the first film 110, and enhance a soft transition effect of the grille 106 on the light board assembly 102, improving the integrated display effect of the plurality of images 112 and increasing the realism of the large-screen visual effect simulated by the first touch control assembly 108.

In some embodiments of the present disclosure, as illustrated in FIG. 1 and FIG. 2, the above display control assembly 100 may further comprise a first panel 120 and a second touch control assembly 122.

In some embodiments, the first panel 120 covers the first touch control assembly 108. The first panel 120 can provide protection for the first touch control assembly 108.

In some embodiments, the second touch control assembly 122 is electrically connected to the first touch control assembly 108.

In some embodiments, as illustrated in FIG. 2, a first opening 124 is formed at each of the first touch control assembly 108 and the first panel 120. The second touch control assembly 122 extends through the first opening 124.

In some embodiments, as illustrated in FIG. 2, a display screen 126 is disposed at the second touch control assembly 122. During the operation of the display control assembly 100, a user operation interface may be displayed through the display screen 126. In this way, a touch operation on the second touch control assembly 122 may be performed by the user in combination with content of the user operation interface, achieving in-depth logical interaction through the second touch control assembly 122.

In some embodiments, the first panel 120 may be a screen-printed glass panel. When the first panel 120 covers the first touch control assembly 108, an area of the first panel 120 corresponding to the plurality of images 112 attached to the first film 110 is transparent, and other areas of the first panel 120 are made of an opaque material. In this way, while the first panel 120 protects the first touch control assembly 108, the plurality of images 112 attached to the first film 110 can be clearly displayed.

In some embodiments, the second touch control assembly 122 is rotatably operable. The second touch control assembly 122 may be a knob assembly, which is not specifically limited herein.

In some embodiments, the display screen 126 in the second touch control assembly 122 may be a Thin Film Transistor (TFT) screen. A type of the display screen 126 may be selected by the person skilled in the art as desired, which is not specifically limited herein.

In some embodiments of the present disclosure, as illustrated in FIG. 1 and FIG. 2, the display control assembly 100 further comprises a circuit board 128 and a third touch control assembly 130.

In some embodiments, each of the light board assembly 102 and the second touch control assembly 122 is disposed at the circuit board 128. The first touch control assembly 108 is electrically connected to the circuit board 128 via the light board assembly 102.

In some embodiments, as illustrated in FIG. 2, each of the light board assembly 102 and the second touch control assembly 122 is provided with a circuit connection port 136. Each of the light board assembly 102 and the second touch control assembly 122 is electrically connected to and powered by the circuit board 128 via the circuit connection port 136.

In some embodiments, the third touch control assembly 130 is also disposed at the circuit board 128. The third touch control assembly 130 is configured to receive a user input.

In some embodiments, as illustrated in FIG. 2, the third touch control assembly 130 comprises a plurality of second light dots 138 and a first color ring 140.

In some embodiments, as illustrated in FIG. 2, the first color ring 140 is disposed at the first film 110. The first color ring 140 covers the plurality of second light dots 138. When the plurality of second light dots 138 are lighted up, the first color ring 140 disposed at the first film 110 may be displayed through the second film 116, the third film 118, and the first panel 120.

In some embodiments, a color of the first color ring 140 may be red, yellow, orange, pink, or a multicolor, etc. The color of the first color ring 140 may be set by the person skilled in the art as desired, which is not specifically limited herein.

In some embodiments, as illustrated in FIG. 2, a second color ring 142 may be disposed at the first panel 120. The second color ring 142 covers the first color ring 140. The first color ring 140 is made of a semi-transparent material. The color of the first color ring 140 is different from that of the first color ring 140. In some embodiments, the second color ring 142 may be a semi-transparent gray screen-printed coating, which is not specifically limited herein. In this way, combined with the shielding effect of the third film 118, when the plurality of second light dots 138 are turned off, the first color ring 140 disposed at the first film 110 can be shielded by the second color ring 142 disposed at the first panel 120.

In some embodiments, during the operation of the display control assembly 100, the user can control the on and off of the plurality of second light dots 138 by touching an area corresponding to the second color ring 142 on the first panel 120. When the plurality of second light dots 138 are turned on, the area corresponding to the second color ring 142 on the first panel 120 displays the color of the first color ring 140. When the plurality of second light dots 138 are turned off, the area corresponding to the second color ring 142 on the first panel 120 displays the color of the second color ring 142. In this way, an operating state of the third touch control assembly 130 is indicated by displaying different colors, to facilitate the user's operation of the third touch control assembly 130.

In some embodiments, the first touch control assembly 108, the second touch control assembly 122, and the third touch control assembly 130 may serve as three-level touch keys in the display control assembly 100. Through coordinated operation of the first touch control assembly 108, the second touch control assembly 122, and the third touch control assembly 130, combined linkage display and control can be realized. Therefore, design integrity and operational simplicity of the display control assembly 100 can be achieved, improving an efficiency of user interaction and control via the display control assembly 100. Also, by means of light guidance of the light board assembly 102, a realistic large-screen visual effect can be simulated by the first touch control assembly 108, and flattening of function level can be realized. Therefore, without increasing a manufacturing cost, the operational simplicity and visual integrity can be enhanced.

In some embodiments of the present disclosure, as illustrated in FIG. 2, a first buckle 132 is disposed at the light board assembly 102.

During the operation of the display control assembly 100, that is, when the first touch control assembly 108 covers the light board assembly 102, the first touch control assembly 108 is connected to the light board assembly 102 via the first buckle 132. In this way, during the operation of the display control assembly 100, the first touch control assembly 108 is prevented from shifting relative to the light board assembly 102, ensuring that the plurality of images 112 attached to the first film 110 can accurately correspond to the plurality of light-emitting areas 104 of the light board assembly 102. Therefore, accuracy of operation and control of the first touch control assembly 108 can be guaranteed.

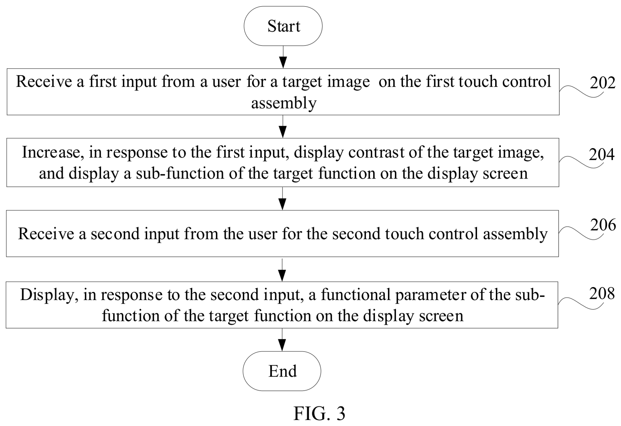

In some embodiments of the present disclosure, as illustrated in FIG. 3, a control method for a cooking appliance is further provided. The method comprises the following steps 202 to 208.

At Step 202, a first input from a user for a target image among the plurality of images on the first touch control assembly is received.

At Step 204, the display contrast of the target image is increased in response to the first input, and sub-functions of a target function are displayed on the display screen.

At Step 206, a second input from the user for the second touch control assembly is received.

At Step 208, functional parameters of the sub-functions of the target function are displayed on the display screen in response to the second input.

In some embodiments, the target image corresponds to a target function of the cooking appliance.

An execution subject of the technical solution of the control method for the cooking appliance according to the embodiment of present disclosure may be the cooking appliance, or a control apparatus for a cooking appliance, or may be determined according to actual usage requirements, which is not limited herein. To describe the control method for the cooking appliance according to the present disclosure more clearly, the following description is given on the premise that the execution subject of the control method for the cooking appliance is the control apparatus for the cooking appliance.

The control method for the cooking appliance according to the present disclosure is used to control operation of the cooking appliance. In some embodiments, the cooking appliance comprises, but is not limited to: a microwave oven, an oven, a microwave-convection-steam oven, an air fryer, a rice cooker, an electric rice cooker, and other cooking appliances, which is not specifically limited herein.

In some embodiments, the cooking appliance comprises the display control assembly according to any one of the above technical solutions. The display control assembly comprises a first touch control assembly and a second touch control assembly.

In some embodiments, a plurality of images are disposed at the first touch control assembly. When the first touch control assembly is turned on, the plurality of images may be clearly displayed. When the first touch control assembly is turned off, the plurality of images are hidden and invisible to the naked eye. Moreover, when the plurality of images are clearly displayed, a smooth transition is achieved between the plurality of images. That is, the plurality of images present the integrated display effect. That is, the realistic large-screen visual effect can be simulated via the first touch control assembly.

In some embodiments, the plurality of images correspond to a plurality of cooking functions of the cooking appliance, respectively, such as a microwave function, a baking function, a stewing function, and an air frying function. By touching an area corresponding to an image among the plurality of images on the first touch control assembly, the user may control the cooking appliance to start a corresponding cooking function for cooking.

In some embodiments, a display screen is disposed at the second touch control assembly. During the operation of the display control assembly, the above first touch control assembly and the above second touch control assembly may operate as a first-level touch control key and a second-level touch control key, respectively. After a cooking function is selected by the user through a touch operation on the first touch control assembly, the display screen of the second touch control assembly may display a cooking content corresponding to the selected cooking function.

In the control method for the cooking appliance according to the present disclosure, in the process where the user controls the operation of the cooking appliance via the aforementioned display control assembly, the control apparatus for the cooking appliance may receive the first input from the user for the target image among the plurality of images on the first touch control assembly, where the target image corresponds to the target function of the cooking appliance. In response to the first input from the user, the control apparatus for the cooking appliance may increase the display contrast of the target image to indicate that the cooking function corresponding to the target image is in a selected state while other cooking functions are in a non-selectable state. The control apparatus for the cooking appliance may increase the display brightness of the target image while reducing the display brightness of images other than the target image on the first touch control assembly, to inform the user of the currently selected cooking function. Also, in response to the first input from the user, the control apparatus for the cooking appliance may display content associated with the target function on the display screen of the second touch control assembly. In an embodiment, at least one sub-function of the target function may be displayed on the display screen of the second touch control assembly.

In some embodiments, the user may further select a sub-function of the target function by means of a second input for the second touch control assembly. The control apparatus for the cooking appliance receives the second input from the user for the second touch control assembly, and in response to the second input, display a functional parameter of the sub-function of the target function selected by the user on the display screen of the second touch control assembly, to allow the user to control the cooking appliance to perform a cooking operation according to the corresponding functional parameter. In this way, the first touch control assembly and the second touch control assembly can operate as the first-level touch control key and the second-level touch control key, respectively, realizing combined linkage display and control during the operation of the cooking appliance, and improving the operational simplicity of the cooking appliance. In addition, the efficiency of user interaction with the cooking appliance via the display control assembly can be improved. Also, by simulating the realistic large-screen visual effect via the first touch control assembly and realizing the flattening of the function level, the operational simplicity and the visual integrity during the operation of the cooking appliance can be enhanced without increasing the manufacturing cost.

In some embodiments of the present disclosure, the second input comprises a second sub-input and a first sub-input. The above Step 208 may comprise the following Step 208a and Step 208b.

At Step 208a, in response to the first sub-input, the sub-function displayed on the display screen is switched.

At Step 208b, when a target sub-function is displayed on the display screen, in response to the second sub-input, a functional parameter of the target sub-function is displayed on the display screen.

In this embodiment, the above second input may comprise the first sub-input and the second sub-input. At least one sub-function of the target function may be switched and viewed on the display screen of the second touch control assembly via the first sub-input from the user for the second touch control assembly. In addition, a sub-function among the at least one sub-function of the target function may be selected for cooking via the second sub-input from the user for the second touch control assembly.

In response to the second input from the user for the second touch control assembly, the control apparatus for the cooking appliance displays the functional parameter of the sub-function of the target function selected by the user on the display screen of the second touch control assembly. In this process, the control apparatus for the cooking appliance may switch, in response to the first sub-input from the user, the sub-function of the target function displayed on the display screen of the second touch control assembly. In response to the user selecting the target sub-function displayed on the display screen, the control apparatus for the cooking appliance may, in response to the second sub-input from the user, display the functional parameter of the target sub-function on the display screen of the second touch control assembly. In this way, combined linkage display and control during the operation of the cooking appliance can be achieved, enhancing the operational simplicity of the cooking appliance and improving the efficiency of user interaction with the cooking appliance via the display control assembly.

In some embodiments, the second touch control assembly is rotatably operable. The second touch control assembly may be a knob assembly, which is not specifically limited herein.

In some embodiments, the first sub-input and the second sub-input are different touch operations performed by the user on the second touch control assembly. For example, the first sub-input is a rotation operation performed by the user on the second touch control assembly, while the second sub-input may be a pressing operation performed by the user on the second touch control assembly. A specific input form of the above first sub-input and second sub-input may be set by the person skilled in the art as desired, which is not specifically limited herein.

In some embodiments of the present disclosure, after the above Step 208, the above control method for the cooking appliance may comprise the following Step 210 and Step 212.

At Step 210, a third input from the user for the second touch control assembly is received.

At Step 212, a parameter value of the functional parameter is set in response to the third input, and operation of the cooking appliance is controlled according to the parameter value.

In this embodiment, subsequent to the user selecting a sub-function among the at least one sub-function of the target function via the second input on the second touch control assembly, and causing the functional parameter of the sub-function of the target function selected by the user to be displayed on the display screen of the second touch control assembly, the user may further control the cooking appliance to perform cooking according to the corresponding functional parameter value via a third input on the second touch control assembly. The control apparatus for the cooking appliance may receive and respond to the third input from the user for the second touch control assembly, set the parameter value of the functional parameter of the sub-function selected by the user, and control the operation of the cooking appliance according to the parameter value set by the user. In this way, hierarchical control over a function of the cooking appliance can be realized via the first touch control assembly and the second touch control assembly, achieving the combined linkage display and control during the operation of the cooking appliance, enhancing the operational simplicity of the cooking appliance, and improving the efficiency of user interaction with the cooking appliance via the display control assembly.

In some embodiments of the present disclosure, the third input may comprise a fourth sub-input and a third sub-input. The step of setting, in response to the third input, the parameter value of the functional parameter may comprise the following Step 212a and Step 212b.

At Step 212a, the parameter value of the functional parameter displayed on the display screen is adjusted in response to the third sub-input.

At Step 212b, in response to a first numerical value being displayed on the display screen, the parameter value of the functional parameter is set as the first numerical value in response to the fourth sub-input.

In this embodiment, the third input may comprise the third sub-input and the fourth sub-input. The user may increase or decrease the parameter value of the functional parameter displayed on the display screen of the second touch control assembly via the third sub-input for the second touch control assembly, and set the parameter value of the functional parameter via the fourth sub-input for the second touch control assembly.

In the process where the control apparatus for the cooking appliance controls, in response to the third input from the user for the second touch control assembly, the operation of the cooking appliance according to the parameter value set by the user, the control apparatus for the cooking appliance may, in response to the third sub-input from the user, adjust the parameter value of the functional parameter of the sub-function displayed on the display screen of the second touch control assembly. In response to the user selecting the first numerical value displayed on the display screen, the control apparatus for the cooking appliance may, in response to the fourth sub-input from the user, set the parameter value of the corresponding functional parameter as the first numerical value. In addition, subsequent to completion of setting of all parameter values of functional parameters of the sub-function selected by the user, the cooking appliance is controlled to operate according to the functional parameter value set by the user. In this way, hierarchical control over the function of the cooking appliance can be realized via the first touch control assembly and the second touch control assembly, achieving the combined linkage display and control during the operation of the cooking appliance, enhancing the operational simplicity of the cooking appliance, and improving the efficiency of user interaction with the cooking appliance via the display control assembly.

In some embodiments, the second touch control assembly may be rotatably operable. The above second touch control assembly may be a knob assembly, which is not specifically limited herein.

In some embodiments, the third sub-input and the fourth sub-input are different touch operations performed by the user on the second touch control assembly. For example, the third sub-input is a rotation operation performed by the user on the second touch control assembly, while the fourth sub-input may be a pressing operation performed by the user on the second touch control assembly. An input form of the third sub-input and fourth sub-input may be set by the person skilled in the art as desired, which is not specifically limited herein.

In some embodiments of the present disclosure, subsequent to the above Step 212b, the control method for the cooking appliance may further comprise the following Step 214.

At Step 214, the parameter value of the functional parameter is switched to a second numerical value in response to a fourth input from the user for the second touch control assembly.

In this embodiment, subsequent to the parameter value of the functional parameter of the selected sub-function being set as the first numerical value via the third input from the user for the second touch control assembly, and the cooking appliance being controlled to perform the cooking operation according to the first numerical value, during the cooking of the cooking appliance, the functional parameter value for controlling the cooking appliance to perform the cooking operation may be reset via the fourth input from the user for the second touch control assembly according to actual needs of the user. Based on this, during the cooking of the cooking appliance, the control apparatus for the cooking appliance may receive and respond to the fourth input from the user for the second touch control assembly, to reset the parameter value of the functional parameter of the selected cooking sub-function from the originally set first numerical value to the newly set second numerical value by the user, and control the cooking appliance to continue the cooking operation according to the newly set second numerical value. In this way, the operational simplicity of the cooking appliance can be improved, and the efficiency of user interaction with the cooking appliance via the display control assembly can be enhanced.

In some embodiments of the present disclosure, subsequent to the above Step 212, the control method for the cooking appliance may further comprise the following Step 216 and Step 218.

At Step 216, cooking progress information is displayed on the display screen according to the parameter value of the functional parameter.

At Step 218, subsequent to completion of the cooking process, prompt information is displayed on the display screen.

In some embodiments, the cooking progress information comprises at least one of or a combination of a cooking mode, a cooking temperature, or remaining cooking time.

In this embodiment, subsequent to the parameter value of the functional parameter of the selected sub-function being set via the third input from the user for the second touch control assembly, and the cooking appliance being controlled to perform the cooking operation according to the set parameter value, the control apparatus for the cooking appliance may further display the cooking progress information on the display screen of the second touch control assembly based on the parameter value of the functional parameter set by the user. In addition, subsequent to completion of the cooking operation by the cooking appliance, the control apparatus for the cooking appliance may further display the prompt information on the display screen of the second touch control assembly to remind the user that the cooking process ends. In this way, the user can grasp the cooking progress in a timely manner and perform a subsequent operation timely after the cooking process ends, improving usability of the cooking appliance, and thus enhancing a cooking efficiency of the user.

In some embodiments, the cooking progress information may comprise at least one of: the remaining cooking time, the cooking temperature, a cooking power, or a cooking mode. The cooking mode is configured to indicate a cooking sub-function currently being executed by the cooking appliance.

In some embodiments of the present disclosure, the display control assembly further comprises a third touch control assembly. Subsequent to the above Step 212, the control method for the cooking appliance may further comprise the following Step 220 and Step 222.

At Step 220, a fifth input from the user for the third touch control assembly is received.

At Step 222, in response to the fifth input, the cooking appliance is controlled to pause or cancel operation, and the display contrast of the target image is reduced.

In this embodiment, the display control assembly may further comprise the third touch control assembly.

Subsequent to the cooking appliance being controlled to perform the cooking operation according to the set parameter value via the third input from the user for the second touch control assembly, during the cooking of the cooking appliance, the user may interrupt or cancel the current cooking process according to a need of the user via the fifth input from the user for the third touch control assembly. Based on this, during the cooking operation of the cooking appliance, the control apparatus for the cooking appliance may receive and respond to the fifth input from the user for the third touch control assembly to interrupt or cancel the cooking operation that the cooking appliance is currently executing. Also, the control apparatus for the cooking appliance may reduce the display contrast of the target image, to restore cooking functions corresponding to the plurality of images on the first touch control assembly to a selectable state. In an embodiment, the control apparatus for the cooking appliance may reduce the display brightness of the target image while increasing display brightness of other images on the first touch control assembly except the target image, to adjust the plurality of images set at the first touch control assembly to be in the same display brightness. In this way, the operational simplicity of the cooking appliance can be improved, and the efficiency of user interaction with the cooking appliance via the display control assembly can be enhanced.

To sum up, in the control method for the cooking appliance according to the embodiments of the present disclosure, by the first touch control assembly, the second touch control assembly, and the third touch control assembly, hierarchical control over the function of the cooking appliance can be realized, and combined linkage display and control during the operation of the cooking appliance can be realized. Therefore, the operational simplicity of the cooking appliance can be improved, and the efficiency of user interaction with the cooking appliance via the display control assembly can be enhanced. Also, the realistic large-screen visual effect can be simulated by the first touch control assembly, and the flattening of the function level can be realized. Therefore, without increasing the manufacturing cost, the operational simplicity and the visual integrity during the operation of the cooking appliance can be enhanced.

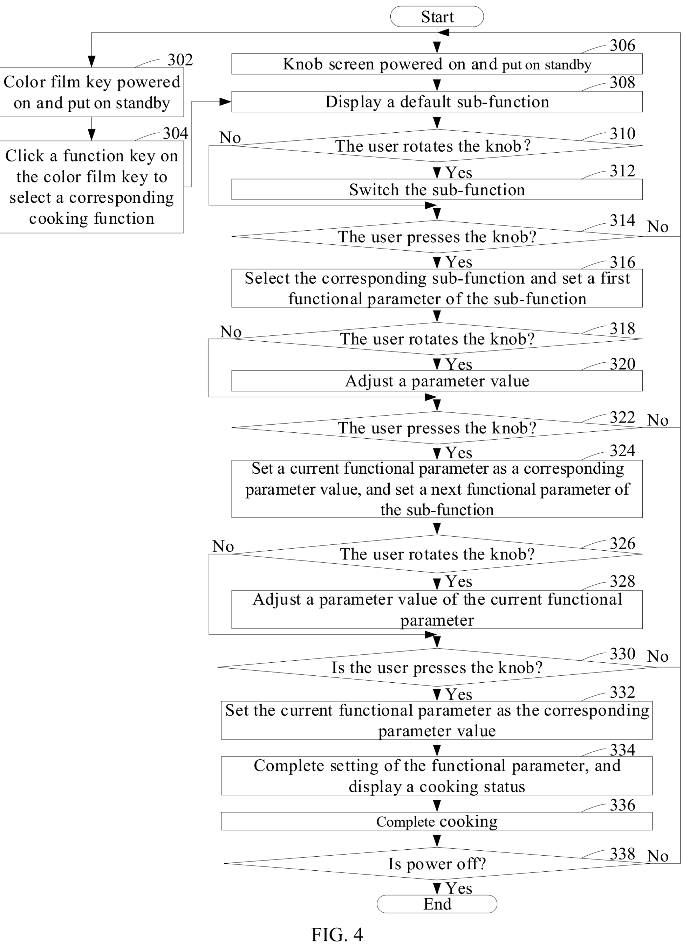

In some embodiments, as illustrated in FIG. 4, a case where the first touch control assembly is a color film key and the second touch control assembly is a knob is taken as an example. The control method for the cooking appliance according to the embodiments of the present disclosure may comprise the following Steps 302 to 338.

At Step 302, the color film key is powered on and put on standby.

At Step 304, a color film function key is clicked to select a corresponding cooking function.

At Step 306, a knob screen is powered on and put on standby.

At Step 308, a default sub-function is displayed.

At Step 310, it is determined whether the user rotates the knob. Based on the determination that the user rotates the knob, Step 312 is executed. Based on the determination that the user does not rotate the knob, Step 314 is executed.

At Step 312, the sub-function is switched.

At Step 314, it is determined whether the user presses the knob. Based on the determination that the user presses the knob, Step 316 is executed. Based on the determination that the user does not press the knob, Step 306 is executed.

At Step 316, a corresponding sub-function is selected, and a first functional parameter of the sub-function is set.

At Step 318, it is determined whether the user rotates the knob. Based on the determination that the user rotates the knob, Step 320 is executed. Based on the determination that the user does not rotate the knob, Step 322 is executed.

At Step 320, a parameter value is adjusted.

At Step 322, it is determined whether the user presses the knob. Based on the determination that the user presses the knob, Step 324 is executed. Based on the determination that the user does not press the knob, Step 306 is executed.

At Step 324, a current functional parameter is set as a corresponding parameter value, and a next functional parameter of the sub-function is set.

At Step 326, it is determined whether the user rotates the knob. Based on the determination that the user rotates the knob, Step 328 is executed. Based on the determination that the user does not rotate the knob, Step 330 is executed.

At Step 328, a parameter value of the current functional parameter is adjusted.

At Step 330, it is determined whether the user presses the knob. Based on the determination that f the user presses the knob, Step 332 is executed. Based on the determination that the user does not press the knob, Step 306 is executed.

At Step 332, the current functional parameter is set as the corresponding parameter value.

At Step 334, setting of the functional parameter is completed, and a cooking status is displayed.

At Step 336, the cooking process is completed.

At Step 338, it is determined whether the power is cut off. Based on the determination that the power is cut off, the process is ended. Based on the determination that the power is not cut off, Step 302 and Step 306 are executed.

In some embodiments, the cooking function comprises, but is not limited to: a microwave function, a steam function, a conventional oven function, a superheated steam function, an air frying function, and a recipe function. The microwave function may comprise a sub-function of microwave heating, and a functional parameter thereof may comprise a temperature and time. A sub-function of the steam function may comprise pure steaming, high-temperature steaming, and rapid steaming. A functional parameter of each of the pure steaming and the high-temperature steaming may comprise a temperature and time. A functional parameter of the rapid steaming may comprise time. A sub-function of the conventional oven function may comprise preheating and conventional baking. A functional parameter of the preheating may comprise a temperature. A functional parameter of the conventional baking may comprise a temperature and time. A sub-function of the superheated steam function may comprise preheating and superheated steaming. A functional parameter of the preheating may comprise a temperature. A functional parameter of the superheated steaming may comprise a temperature and time. A sub-function of the air frying function may comprise preheating and air frying. A functional parameter of the preheating may comprise a temperature. A functional parameter of the air frying may comprise a temperature and time. A sub-function of the recipe function may comprise a recipe selection function.

In some embodiments, the cooking function may further comprise other functions such as a thawing function, a fermentation function, a heat preservation function, a sterilization and disinfection function, a drying function, a deodorization function, a cleaning function, and a descaling function, which are not specifically limited herein. A functional parameter of the thawing function may comprise a food weight. A functional parameter of the fermentation function may comprise a temperature and time. A functional parameter of each of the heat preservation function, the sterilization and disinfection function, the drying function, the deodorization function, the cleaning function, and the descaling function may comprise time.

The cooking function, the cooking sub-function, and the functional parameter may be set by the person skilled in the art as desired, which are not specifically limited herein.

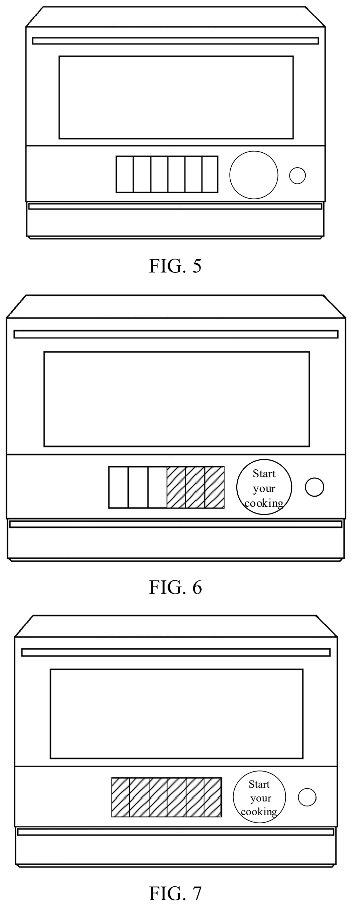

As illustrated in FIG. 5 to FIG. 13, a case where the first touch control assembly is a color film key, the second touch control assembly is a knob screen, the third touch control assembly is an independent key, and the target function is the superheated steam function is taken as an example to describe the control method for the cooking appliance according to the embodiments of the present disclosure.

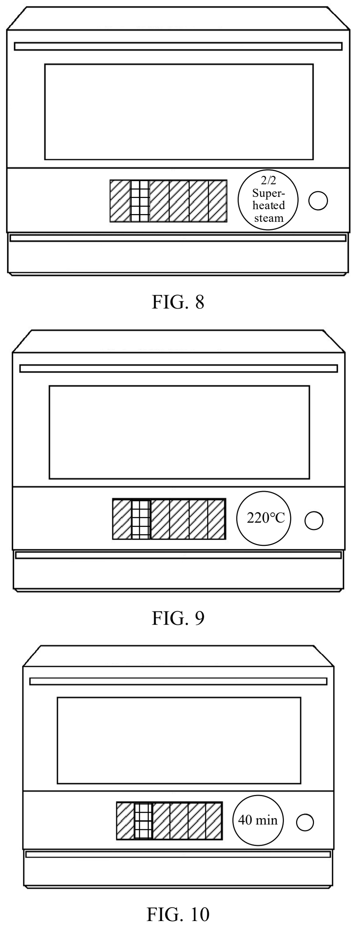

As illustrated in FIG. 5, FIG. 6, and FIG. 7, after the cooking appliance is powered on, the color film key, the knob screen, and the independent key all enter a standby state. The color film key and the independent key light up sequentially from right to left. The color film key displays a plurality of images corresponding to a plurality of cooking functions, respectively. Further, the knob screen plays a startup animation once and then stays on a standby animation. On this basis, as illustrated in FIG. 8, when the user clicks an image corresponding to the superheated steam function on the color film key, a sub-function of the superheated steam function is synchronously displayed on the knob screen. In this case, the sub-function of the superheated steam function displayed on the knob screen can be switched by the user rotating the knob screen, that is, can be switched between the two sub-functions of preheating and superheated steam. Further, when the superheated steam sub-function is displayed on the knob screen, the knob screen may be pressed by the user to select the superheated steam sub-function.

In this case, as illustrated in FIG. 9, a functional parameter of the superheated steam sub-function such as a temperature may be displayed on the knob screen. A temperature value displayed on the knob screen may be adjusted by the user rotating the knob screen, and a temperature parameter of the superheated steam sub-function may be set by the user pressing the knob screen, for example, the temperature parameter of the superheated steam sub-function may be set to 220°C. On this basis, as illustrated in FIG. 10, a next functional parameter of the superheated steam sub-function such as time may be displayed on the knob screen. A time value displayed on the knob screen may be adjusted by the user rotating the knob screen, and the time parameter of the superheated steam sub-function may be set by the user pressing the knob screen, for example, the time parameter of the superheated steam sub-function may be set to 40 min.

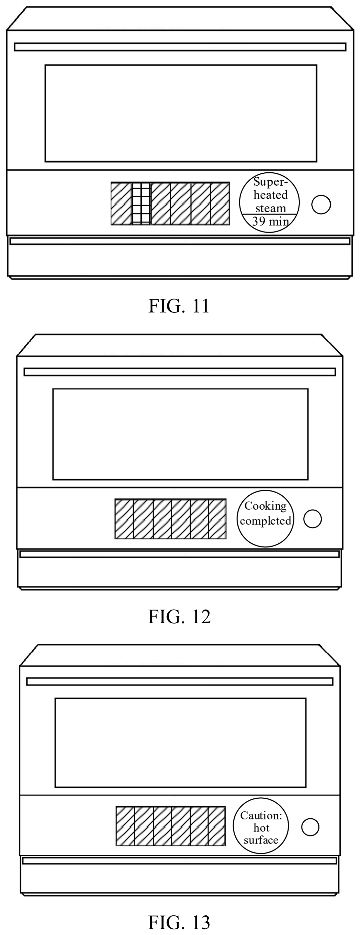

Further, after the user completes setting of all functional parameters of the superheated steam sub-function, the user may press the knob screen to control the cooking appliance to start cooking according to a set functional parameter. In this case, as illustrated in FIG. 11, a name of the currently executed cooking sub-function, namely superheated steam, may be synchronously displayed on the knob screen. In addition, the remaining cooking time may be also displayed in the form of a countdown and a progress bar. Further, as illustrated in FIG. 12 and FIG. 13, after the cooking is completed, the knob screen plays a cooking completion animation once and then plays a warm reminder animation for multiple times, such as 3 times, for example, an animation displaying the slogan "Caution: Hot Surface." On this basis, if the user does not perform operations such as opening and closing an oven door or touching the independent key on the cooking appliance, the knob screen cyclically switches between the cooking completion animation and the warm reminder animation according to a predetermined mode. For example, the knob screen plays the warm reminder animation 3 times and then plays the cooking completion animation for 6 seconds, and this sequence repeats continuously until the user performs operations such as opening and closing the oven door or touching the independent key on the cooking appliance.

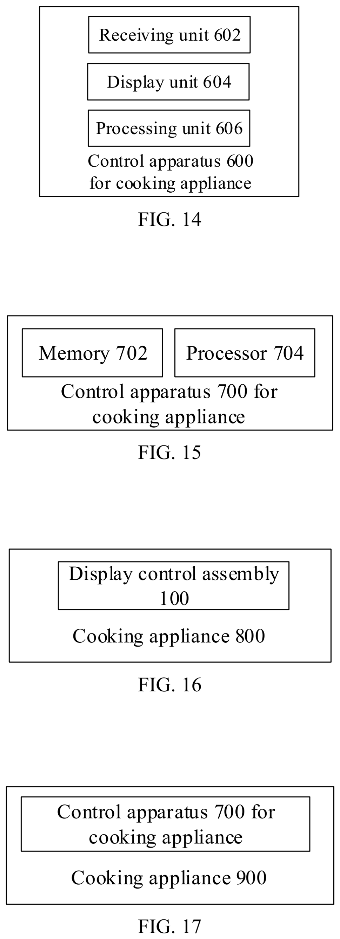

In some embodiments of the present disclosure, a control apparatus for a cooking appliance is further provided. As illustrated in FIG. 14, FIG. 14 is a structural block diagram of a control apparatus 600 for a cooking appliance according to an embodiment of the present disclosure. The control apparatus 600 for the cooking appliance may comprise a receiving unit 602 and a display unit 604.

The receiving unit 602 is configured to receive a first input from a user for a target image on the first touch control assembly. The target image corresponds to a target function of the cooking appliance.

The display unit 604 is configured to, in response to the first input, increase display contrast of the target image and display a sub-function of the target function on the display screen.

The receiving unit 602 is further configured to receive a second input from the user for the second touch control assembly.

The display unit 604 is further configured to, in response to the second input, display a functional parameter of the sub-function of the target function on the display screen.

The control apparatus 600 for the cooking appliance according to the embodiments of the present disclosure is configured to control the operation of the cooking appliance. In some embodiments, the above cooking appliance comprises, but is not limited to: a microwave oven, an oven, a microwave-convection-steam oven, an air fryer, a rice cooker, an electric rice cooker, and other cooking appliances, which is not specifically limited herein.

In some embodiments, the cooking appliance comprises the display control assembly according to any one of the above technical solutions. The display control assembly comprises the first touch control assembly and the second touch control assembly.

In some embodiments, the plurality of images are disposed at the first touch control assembly. When the first touch control assembly is turned on, the plurality of images may be clearly displayed. When the first touch control assembly is turned off, the plurality of images may be hidden and invisible to the naked eye. Moreover, when the plurality of images are clearly displayed, the smooth transition is achieved between the plurality of images. That is, the plurality of images present the integrated display effect. Therefore, the realistic large-screen visual effect can be simulated via the first touch control assembly.

In some embodiments, the plurality of images correspond to the plurality of cooking functions of the cooking appliance, respectively, such as the microwave function, the baking function, the stewing function, and the air frying function. The cooking appliance may be controlled by the user to start the cooking function for cooking by touching the area corresponding to the corresponding image on the first touch control assembly.

In some embodiments, the display screen is disposed at the second touch control assembly. During the operation of the display control assembly, the first touch control assembly and the second touch control assembly may operate as the first-level touch control key and the second-level touch control key, respectively. After the cooking function is selected by the user through a touch operation for the first touch control assembly, the display screen of the second touch control assembly may display the cooking content corresponding to the selected cooking function.

The control apparatus 600 for the cooking appliance according to the present disclosure comprises the receiving unit 602 and the display unit 604. In the process where the user controls the operation of the cooking appliance via the display control assembly, the receiving unit 602 may receive the first input from the user for the target image among on the first touch control assembly, where the target image corresponds to the target function of the cooking appliance. In response to the first input from the user, the display unit 604 may increase the display contrast of the target image to indicate that the cooking function corresponding to the target image is in the selected state while other cooking functions are in the non-selectable state. In an embodiment, the display unit 604 may increase the display brightness of the target image while reducing the display brightness of images other than the target image on the first touch control assembly, to inform the user of the currently selected cooking function. Also, in response to the first input from the user, the display unit 604 may display content associated with the target function on the display screen of the second touch control assembly. In an embodiment, the at least one sub-function of the target function may be displayed on the display screen of the second touch control assembly.

In some embodiments, the user may further select the sub-function of the target function by means of the second input for the second touch control assembly. The receiving unit 602 is configured to receive the second input from the user for the second touch control assembly. The display unit 604 is configured to display, in response to the second input, the functional parameter of the sub-function of the target function selected by the user on the display screen of the second touch control assembly, to allow the user to control the cooking appliance to perform the cooking operation according to the corresponding functional parameter. In this way, the first touch control assembly and the second touch control assembly can operate as the first-level touch control key and the second-level touch control key, respectively, realizing combined linkage display and control during the operation of the cooking appliance, and improving the operational simplicity of the cooking appliance. In addition, the efficiency of user interaction with the cooking appliance via the display control assembly can be improved. Also, by simulating the realistic large-screen visual effect via the first touch control assembly and realizing the flattening of the function level, the operational simplicity and the visual integrity during the operation of the cooking appliance can be enhanced without increasing the manufacturing cost.

In some embodiments of the present disclosure, the second input comprises the second sub-input and the first sub-input. The display unit 604 is configured to: switch, in response to the first sub-input, the sub-function displayed on the display screen; and display the functional parameter of the target sub-function on the display screen in response to the second sub-input when the target sub-function is displayed on the display screen.

In some embodiments of the present disclosure, the receiving unit 602 is further configured to receive the third input from the user for the second touch control assembly. The control apparatus 600 for the cooking appliance further comprises a processing unit 606. The processing unit 606 is configured to: set, in response to the third input, a parameter value of the functional parameter, and control operation of the cooking appliance to operate according to the parameter value.

In some embodiments of the present disclosure, the third input comprises a fourth sub-input and a third sub-input. The processing unit 606 is configured to: adjust, in response to the third sub-input, the parameter value of the functional parameter displayed on the display screen; and in response to a first numerical value being displayed on the display screen, set, in response to the fourth sub-input, the parameter value of the functional parameter as the first numerical value.

In some embodiments of the present disclosure, the processing unit 606 is further configured to: switch, in response to a fourth input from the user for the second touch control assembly, the parameter value of the functional parameter to a second numerical value.

In some embodiments of the present disclosure, the display unit 604 is further configured to: display cooking progress information on the display screen according to the parameter value of the functional parameter; and display, subsequent to completion of the cooking, prompt information on the display screen. The cooking progress information comprises at least one or a combination of: the cooking mode, the cooking temperature, and the remaining cooking time.

In some embodiments of the present disclosure, the display control assembly further comprises a third touch control assembly. The receiving unit 602 is further configured to: receive a fifth input from the user for the third touch control assembly. The processing unit 606 is further configured to: in response to the fifth input, control the cooking appliance to pause or cancel operation. The display unit 604 is further configured to: reduce the display contrast of the target image.

In some embodiments of the present disclosure, another control apparatus for a cooking appliance is further provided. As illustrated in FIG. 15, FIG. 15 is a structural block diagram of a control apparatus 700 for a cooking appliance according to an embodiment of the present disclosure. The control apparatus 700 for the cooking appliance comprises: a memory 702 having a program or an instruction stored thereon; a processor 704. The processor 704, when executing the program or the instruction, is configured to implement the steps of the control method for the cooking appliance according to any one of the above embodiments.

The control apparatus 700 for the cooking appliance according to the embodiment comprises the memory 702 and the processor 704. When the program or the instruction in the memory 702 is executed by the processor 704, the steps of the control method for the cooking appliance according to any one of the above embodiments are implemented. Therefore, the control apparatus 700 for the cooking appliance has all the advantageous effects of the control method for the cooking appliance according to any one of the above embodiments, which are not repeated herein.

In some embodiments, the memory 702 and the processor 704 may be connected to each other via a bus or in other ways. The processor 704 may comprise one or more processing units. The processor 704 may be a chip such as a Central Processing Unit (CPU), a Digital Signal Processor (DSP), an Application Specific Integrated Circuit (ASIC), or a Field Programmable Gate Array (FPGA).

In some embodiments of the present disclosure, a cooking appliance is further provided. As illustrated in FIG. 16, FIG. 16 is a structural block diagram of a cooking appliance 800 according to an embodiment of the present disclosure. The cooking appliance 800 comprises the display control assembly 100 according to any one of the above embodiments. Therefore, the cooking appliance 800 has all the advantageous effects of the display control assembly 100 according to any one of the above embodiments, which are not repeated herein.

In some embodiments of the present disclosure, another cooking appliance is further provided. As illustrated in FIG. 17, FIG. 17 is a structural block diagram of a cooking appliance 900 according to an embodiment of the present disclosure. The cooking appliance 900 comprises the control apparatus 700 for the cooking appliance according to the aforementioned embodiment. Therefore, the cooking appliance 800 has all the advantageous effects of the control apparatus 700 for the cooking appliance according to the aforementioned embodiment, which are not repeated herein.

In some embodiments, the above cooking appliance 800 and the cooking appliance 900 comprise, but are not limited to, appliances such as microwave ovens, ovens, microwave-convection-steam ovens, air fryers, rice cookers, or electric rice cookers, which are not specifically limited herein.

In some embodiments of the present disclosure, a readable storage medium is further provided. The readable storage medium has a program or an instruction stored thereon. The program or the instruction, when executed by the processor, is configured to implement the steps of the control method for the cooking appliance according to any one of the above embodiments.

The readable storage medium according to the embodiments of the present disclosure stores the program or the instruction which, when executed by the processor, can implement the steps of the control method for the cooking appliance according to any one of the above embodiments. Therefore, the readable storage medium has all the advantageous effects of the control method for the cooking appliance according to any one of the above embodiments, which are not repeated herein.

In some embodiments, the aforementioned readable storage medium may comprise any medium capable of storing or transmitting information. Examples of the readable storage medium comprise an electronic circuit, a semiconductor memory device, a Read-Only Memory (ROM), a Random Access Memory (RAM), a Compact Disc Read-Only Memory (CD-ROM), a flash memory, an Erasable ROM (EROM), a magnetic tape, a floppy disk, an optical disc, a hard disk, an optical fiber medium, a radio frequency (RF) link, an optical data storage device, or the like. A code segment may be downloaded via computer networks such as the Internet and intranets.

In the description of the present disclosure, the terms "first" and "second" are only used for descriptive purposes, and cannot be understood as indicating or implying relative importance, unless otherwise clearly stipulated and limited. The terms such as "connect," "mount," and "fixed to" should be understood in a broad sense. For example, it may be a fixed connection or a detachable connection or connection as one piece; direct connection or indirect connection through an intermediate. For those skilled in the art, specific meanings of the above-mentioned terms in the present disclosure can be understood according to specific circumstances.

In the description of the present disclosure, the terms "one embodiment", "some embodiments", "a specific embodiment", etc., means that specific features, structures, materials, or characteristics described in conjunction with the embodiment(s) or example(s) are comprised in at least one embodiment or example of the present disclosure. In the present disclosure, any illustrative reference of the above terms does not necessarily refer to the same embodiment(s) or example(s). Moreover, the specific features, structures, materials, or characteristics as described can be combined in any one or more embodiments or examples as appropriate.

In addition, combinations can be performed on the technical solutions according to various embodiments of the present disclosure, but these combinations must be based on the fact that they can be realized by those skilled in the art. When a combination of the technical solutions is contradictory or unattainable, the combination of the technical solutions neither exists nor falls within the protection scope of the appended claims of the present disclosure.

Although some embodiments of the present disclosure are described above, the scope of the present disclosure is not limited to the embodiments. For those skilled in the art, various modifications and variations may be made to the present disclosure. Any modification, equivalent replacement, improvement, etc., made within the spirit and principles of the present disclosure shall fall within the scope of protection of the present disclosure.

## Claims

1. A display control assembly, comprising:
a light board assembly comprising a plurality of light-emitting areas, wherein a grille is disposed between every two adjacent light-emitting areas of the plurality of light-emitting areas; and
a first touch control assembly covering the light board assembly, wherein the first touch control assembly comprises:
a first film, wherein a plurality of images are attached to the first film, the plurality of images corresponding to the plurality of light-emitting areas, a covering portion being disposed between every two adjacent images of the plurality of images, and the covering portion being configured to shield the grille,
wherein the covering portion is of a first color, and a pixel value of the first color is smaller than a target value.

2. The display control assembly according to claim 1, wherein the first touch control assembly further comprises:
a second film covering the first film and configured to receive a touch input from a user; and
a third film covering the second film, wherein the third film is of a second color, a pixel value of the second color being smaller than or equal to the pixel value of the first color.

3. The display control assembly according to claim 1, wherein the first color of the covering portion is in a gradient mode.

4. The display control assembly according to any one of claims 1 to 3, further comprising:
a first panel covering the first touch control assembly; and
a second touch control assembly, wherein a first opening is formed at each of the first touch control assembly and the first panel, the second touch control assembly extends through the first opening, and a display screen is disposed at the second touch control assembly.

5. The display control assembly according to claim 4, further comprising:
a circuit board, wherein the light board assembly and the second touch control assembly are disposed at the circuit board; and
a third touch control assembly disposed at the circuit board.

6. The display control assembly according to any one of claims 1 to 3, wherein the light board assembly further comprises:
a first buckle, wherein the first touch control assembly is connected to the light board assembly via the first buckle.

7. A control method for a cooking appliance, wherein the cooking appliance comprises a display control assembly comprising a first touch control assembly and a second touch control assembly, wherein a plurality of images are disposed at the first touch control assembly, and a display screen is disposed at the second touch control assembly, and
wherein the control method for the cooking appliance comprises:
receiving a first input from a user for a target image on the first touch control assembly, the target image corresponding to a target function of the cooking appliance;
increasing, in response to the first input, display contrast of the target image, and displaying a sub-function of the target function on the display screen;
receiving a second input from the user for the second touch control assembly; and
displaying, in response to the second input, a functional parameter of the sub-function of the target function on the display screen.

8. The control method for the cooking appliance according to claim 7, wherein the second input comprises a first sub-input and a second sub-input, and said displaying, in response to the second input, the functional parameter of the sub-function of the target function on the display screen comprises:
switching, in response to the first sub-input, the sub-function of the target function displayed on the display screen; and
in response to a target sub-function being displayed on the display screen, displaying, in response to the second sub-input, a functional parameter of the target sub-function on the display screen.

9. The control method for the cooking appliance according to claim 7, further comprising, subsequent to said displaying the functional parameter of the sub-function of the target function on the display screen:
receiving a third input from the user for the second touch control assembly; and
setting, in response to the third input, a parameter value of the functional parameter, and controlling operation of the cooking appliance according to the parameter value.

10. The control method for the cooking appliance according to claim 9, wherein the third input comprises a third sub-input and a fourth sub-input, and said setting, in response to the third input, the parameter value of the functional parameter comprises:
switching, in response to the third sub-input, the parameter value of the functional parameter displayed on the display screen; and
in response to a first numerical value being displayed on the display screen, setting, in response to the fourth sub-input, the parameter value of the functional parameter as the first numerical value.

11. The control method for the cooking appliance according to claim 10, further comprising, subsequent to said setting the parameter value of the functional parameter as the first numerical value:
during cooking, switching, in response to a fourth input from the user for the second touch control assembly, the parameter value of the functional parameter from the first numerical value to a second numerical value.

12. The control method for the cooking appliance according to any one of claims 9 to 11, further comprising, subsequent to said setting, in response to the third input, the parameter value of the functional parameter:
displaying cooking progress information on the display screen according to the parameter value of the functional parameter, wherein the cooking progress information comprises at least one of: a cooking mode, remaining cooking time, or a cooking temperature; and
displaying, subsequent to completion of the cooking process, prompt information on the display screen.

13. The control method for the cooking appliance according to any one of claims 9 to 11, wherein the display control assembly further comprises a third touch control assembly, and the control method for the cooking appliance further comprises, subsequent to said controlling the operation of the cooking appliance according to the parameter value:
receiving a fifth input from the user for the third touch control assembly; and
in response to the fifth input, controlling the cooking appliance to cancel or pause operation, and reducing the display contrast of the target image.

14. A control apparatus for a cooking appliance, wherein the cooking appliance comprises a display control assembly, the display control assembly comprising a first touch control assembly and a second touch control assembly, wherein a plurality of images are disposed at the first touch control assembly, and a display screen is disposed at the second touch control assembly, and
wherein the control apparatus for the cooking appliance comprises:
a receiving unit configured to receive a first input from a user for a target image on the first touch control assembly, the target image corresponding to a target function of the cooking appliance;
a display unit configured to, in response to the first input, increase display contrast of the target image and display a sub-function of the target function on the display screen, wherein:
the receiving unit is further configured to receive a second input from the user for the second touch control assembly; and
the display unit is further configured to, in response to the second input, display a functional parameter of the sub-function of the target function on the display screen.

15. A control apparatus for a cooking appliance, comprising:
a processor; and
a memory configured to store a program or an instruction executable on the processor, wherein the program or the instruction is configured to, when executed by the processor, implement steps of a control method for the cooking appliance according to any one of claims 7 to 13.

16. A cooking appliance, comprising:
a display control assembly according to any one of claims 1 to 6.

17. A cooking appliance, comprising:
a control apparatus for the cooking appliance according to claim 15.

18. A readable storage medium, having a program or an instruction stored thereon, wherein the program or the instruction is configured to, when executed by a processor, implement steps of a control method for the cooking appliance according to any one of claims 7 to 13.
